# EUROPÄISCHE PATENTANMELDUNG

(11) **EP 2 110 878 A2**
(43) Veröffentlichungstag der Anmeldung: **21.10.2009**
(21) Anmeldenummer: 09004880.2
(22) Anmeldetag: 02.04.2009
(51) Int. Cl.: H01M 8/04

(54) **Einrichtung und Verfahren zum Betreiben einer Brennstoffzelle**

(30) Priorität: 15.04.2008 DE 102008018780
(71) Anmelder: Diehl Aerospace GmbH, 88662 Überlingen (DE)
(72) Erfinder: Knepple, Ronny, 88662 Überlingen (DE); Blumenstein, Dieter, 88690 Uhldingen-MÜhlhofen (DE); Speth, Bernd, 88662 Überlingen (DE)
(74) Vertreter: Kummer, Ralf

(57) **Zusammenfassung**

Für die Speisung mit ihren Eduktgasen (H, O) ist einer Brennstoffzelle (11) ein Druckausgleichssystem (16) mit zwei über ein differenzdruckabhängig verformbares oder verlagerbares Trennmedium untereinander in Wechselwirkung stehenden variablen Teilvolumina bei konstantem Summenvolumen vorgeschaltet. Dafür kann ein Druck-Ausgleichsbehälter (19) vorgesehen sein, der durch eine differenzdruckabhängig verform- oder verlagerbare Trennwand (18) in zwei Kammern (17H, 170) unterteilt ist; oder zwei Kammern (17H, 170) sind durch einen Ausgleichskanal (21) mit darin differenzdruckabhängig verlagerbarem festem oder flüssigem Trennmedium miteinander verbunden. Bei unterschiedlichen Eduktgas-Drücken wird das Trennmedium zur Kammer (17) mit geringerem Gasdruck hin verlagert, bis infolge entsprechender Änderung der Teilvolumina beiderseits des Trennmediums Druckgleichgewicht herrscht. In der aus den Kammern (17) gespeisten Brennstoffzelle (11) wird deren bruchempfindliche Membran (12) deshalb nun nicht mehr mit einer zerstörungskritischen dynamischen Druckdifferenz beaufschlagt, ohne dafür regelungstechnisch in Einspeisegarnituren für die Eduktgase eingreifen zu müssen.

## Beschreibung

Die Erfindung betrifft eine Einrichtung und ein Verfahren gemäß den Oberbegriffen der beiden Hauptansprüche.

Etwa in der DE 10 2007 029 596 A1 ist beschrieben, dass in einer Brennstoffzelle eine für Protonen durchlässige aber für Elektronen undurchlässige Elektrolyt-Membran die beiden kontinuierlich eingespeisten Eduktgase, nämlich den anodenseitig zugeführten Treibstoff (etwa Wasserstoff) und den kathodenseitig zugeführten Oxidanten (etwa den in der Umgebungsluft enthaltenen Sauerstoff), voneinander getrennt hält. Die Membran kann insbesondere als dünne Polymerfolie (in einer Brennstoffzelle vom PEM-Typ) oder als spröde Oxidkeramik (in einer Brennstoffzelle vom SOFC-Typ) realisiert sein.

Der Erfindung liegt die Erkenntnis zugrunde, dass eine solche sehr dünne Membran, infolge statischer und mehr noch dynamischer Druckunterschiede in der Zelle beiderseits der Membran, sehr bruchgefährdet ist. Eine hinreichend schnell und dennoch ohne Überschwingen reagierende Druckregelung eines der beiden Eduktgase in Abhängigkeit vom momentanen Speisedruck des anderen Eduktgases ist aber sehr aufwendig; zumal weder das Auslassventil einer Gasflasche oder dergleichen Treibstoffspeichers noch der Kompressor für die Luftzufuhr in der Praxis hinreichend schnell, stetig und genau für definierte Druckänderungen eingestellt werden können. Besonders kritisch ist, dass je nach den momentanen Versorgungs- und Betriebsgegebenheiten, etwa bei Lastwechseln, der Druckgradient über der Membran sich kurzfristig und kurzzeitig umkehren kann. Nicht nur während des Betriebs der Zelle, auch bei ihrem Hochfahren zu Betriebsbeginn und Herunterfahren zu Betriebsende müssen zum Vermeiden einseitiger Belastungen der Membran synchrone Druckverläufe eingehalten bleiben, was betriebstechnisch zusätzlich problembehaftet und selbst mit großem aktivem regelungstechnischem Aufwand nur bedingt beherrschbar ist. Ein etwaiger regelungstechnischer Abgleich zwischen den beiden einander entgegenwirkenden Gasdrücken erst in der Brennstoffzelle selbst ist andererseits anlagentechnisch gar nicht realisierbar.

Deshalb liegt der Erfindung die technische Problemstellung zugrunde, eine Brennstoffzelle ohne besonders aufwendigen anlagetechnischen Zusatzaufwand schonender zu betreiben.

Diese Aufgabe ist erfindungsgemäß durch die wesentlichen in den Hauptansprüchen angegebenen Merkmale gelöst. Danach werden die beiden Eduktgase vor ihrer Einspeisung in die Brennstoffzelle durch ein Druckausgleichsystem mit zwei differenzdruckabhängig in Volumen-Wechselwirkung stehenden Räumen geführt. Bei diesen kann es sich um die beiden gegensinnig variablen Teilvolumen der Kammern eines durch eine gasdichte Trennwand geteilten Ausgleichsbehälters handeln; oder die beiden Kammern sind über einen Ausgleichskanal miteinander verbunden, in denen ein gasresistenter Kolben differenzdruckabhängig verlagert wird. Besonders druckempfindlich und leckagefrei verlagert sich ein derartiger Kolben, wenn er als ionische, nämlich gasresistente Salze enthaltende Flüssigkeit realisiert ist, die vorzugsweise bei Druckgleichgewicht selbstdichtend in einem Tauch- oder Bogen-Siphon steht, der in den Verlauf des Ausgleichskanales integriert ist.

Jedenfalls sind bei konstantem Summenvolumen die mit den Eduktgasen gefüllten Teilvolumina in dem Sinne variabel, dass ein gasdruckbedingter Zuwachs des einen der beiden Teilvolumina zu einer gleichen Abnahme des anderen Teilvolumens führt, bis zwischen beiden Teilvolumina Druckgleichgewicht herrscht. Folglich beaufschlagen die aus den beiden stationären Teilvolumina abgeführten Eduktgasströme die beiden Seiten der Zellen-Membran mit stets praktisch gleichem Druck; deren mechanische Gefährdung infolge etwaiger Druckdifferenzen über die Membrane ist nun zuverlässig unterbunden.

Im Falle der Realisierung der erfindungsgemäßen Lösung mit einem in die beiden Kammern voneinander abhängiger Volumina unterteilten Ausgleichsbehälter ist dieser vorzugsweise kesselartig mit einer gasdichten und druckfesten aber druckabhängig verlagerbaren, insbesondere mittig ausstellbaren oder sonstwie differenzdruckabhängig verformbaren Trennwand zwischen den Kammern ausgebildet. Beiderseits ihr sind die nach Maßgabe der momentanen Lage der Trennwand im Behälter resultierenden Teilvolumina des konstanten Summen- oder Behältervolumens einander benachbart. Zweckmäßigerweise handelt es sich bei der Trennwand um ein im Ausgleichsbehälter konstruktiv festlegbares Gebilde, das sich, je nach dem Überdruck im einen Teilvolumen, mehr oder weniger weit ins benachbarte Teilvolumen hinein erstreckt und jenes dadurch entsprechend reduziert, bis sich mit der Druckreduzierung infolge Anwachsens des ersterwähnten Teilvolumens und somit gleichzeitiger Druckerhöhung infolge Reduzierung des zweiterwähnten Teilvolumens zwischen ihnen beiden Druckgleichgewicht eingestellt hat.

Das gilt entsprechend für die Volumenänderung in den beiden Teilen eines zwei Kammern miteinander verbindenden Ausgleichskanales, in dem ein gasfestes Trennmedium differenzdruckabhängig verlagert wird.

Die aus den stationären Teilvolumina an die Brennstoffzelle gelieferten Eduktgase stammen unmittelbar aus untereinander wenigstens angenähert druckgleichen Vorratskammern, nämlich aus den druckangeglichenen Teilvolumina des Ausgleichsbehälters oder des Ausgleichskanales.

Dadurch erübrigt es sich nun auch, beim Kompressor für den Oxidanten einen an sich üblichen Vordruckbehälter einzusetzen. Dessen Funktion kann vom entsprechenden Teilvolumen mit übernommen werden, so dass der resultierende Mehrbedarf an Installationsraum für den Ausgleichsbehälter mit den beiden Kammern bzw. für die beiden Kammern mit ihrem Ausgleichskanal gering ist.

Als reversibel formveränderlich sich in jeweils eines der beiden Teilvolumina hinein erstreckende Trennwand kann eine gesickte Metallmembran etwa der Art eingesetzt werden, wie sie bei Dosenmanometern Anwendung findet. Im Falle der Verwendung einer Kunststoff-Folie für die Trennwand muß diese nicht gummielastisch sein; es genügt, dass sie flexibel (und natürlich undurchlässig für die beiderseits anstehenden Eduktgase) ist. Denn sie muß nicht straff sein, sie vollzieht lediglich eine ausbeulende Verformung vom momentanen Überdruck auf ihrer einen Seite zur Volumenminderung auf der benachbarten Seite. Um lokale Überbeanspruchungen bei plötzlich auftretenden Spannungsspitzen zu vermeiden, ist diese formveränderliche Trennwand vorteilhaft etwa kreisrund berandet; oder jedenfalls in einer runden Öffnung in einer Montagewand befestigt, die dann ihrerseits gegen die Innenperipherie des Ausgleichsbehälters gasdicht anliegt. Für maximale Dynamik soll die Trennwand massearm und leicht beweglich sein; elastische Eigenschaften (dynamikhemmend) sollen vorteilhaft erst bei maximaler Auslenkung der Trennwand zu deren Schutz zur Wirkung kommen.

Wenn die Druckänderung der beiden Eduktgase spürbar unterschiedlich ist, kann es zweckmäßig sein, die ausstellbare Trennwand im Ausgleichsbehälter nicht mittig zwischen gleichgroßen Teilvolumina anzuordnen, sondern stationär exzentrisch einzubauen, um einem unterschiedlichen Raumbedarf der Eduktgase ohne einseitiges, also ständig nur nach einer Seite gerichtetes Ausbeulen der Trennwand Rechnung zu tragen.

Zu einfacher Anpassung an Brennstoffzellen unterschiedlichen Eduktbedarfes kann auch vorgesehen sein, eine von der Einbauöffnung für die verformbare Trennwand durchbrochene Montagewand zu jeweiliger Teilvolumenanpassung an unterschiedlichen Gasbedarf gasdicht querverschiebbar im Ausgleichsbehälter zu lagern.

Bei der Auslegung und Bestückung des Ausgleichsbehälters muß darauf geachtet werden, dass auch die maximal verformte Trennwand Zulauf und Ablauf der Eduktgase nicht behindert, um hieraus keine neuen Druckdifferenzen herrühren zu lassen.

Zweckmäßigerweise werden Maßnahmen wie eine Sensorbestückung etwa mit optischer Positionsdetektierung für die Trennwand getroffen, um bei Erreichen angenähert maximaler Verformung der Trennwand oder schon vorher z.B. ein Drosselventil in der Zuleitung des unter höherem Druck zugeführten Eduktgases, teilweise oder vorübergehend gleich ganz, zu schließen.

Zusätzliche Weiterbildungen und Abwandlungen der erfindungsgemäßen Lösung ergeben sich aus den weiteren Ansprüchen und, auch hinsichtlich deren Vorteilen, aus nachstehender Beschreibung von in der Zeichnung auf das Funktionswesentliche abstrahiert und nicht maßstabsgerecht verkleinert skizzierten bevorzugten Realisierungsbeispielen für eine erfindungsgemäß druckgradientenfreie Beaufschlagung einer Brennstoffzelle mit ihr erfindungsgemäß über einen Zweikammer-Ausgleichssystem zugeführten Eduktgasen. In der Zeichnung zeigt:
Fig.1 einen durch eine variable Trennwand in zwei Kammern differenzdruckabhängigen Volumens für die beiden Eduktgase unterteilten Ausgleichsbehälter vor der Brennstoffzelle und
Fig.2 stattdessen ein Ausgleichssystem mit einem festen oder flüssigen, in einem Ausgleichskanal zwischen zwei Eduktgas-Kammern differenzdruckabhängig verlagerbaren Kolben zum Speisen der Brennstoffzelle.

Eine Brennstoffzelle 11 ist durch eine elektrolytische Membran 12 zweigeteilt. Auf einer Seite der Membran 12, nämlich anodenseitig, wird die Zelle 11 etwa mit Wasserstoff H als Treibstoff über ein Druckminderungs-Ventil 13 aus einem Generator oder aus einem Vorratsspeicher 14 wie einer Druckgasflasche beschickt, und gegenüberliegend, also kathodenseitig, etwa mit Sauerstoff O als dem Oxidanten (aus einem Vorratsspeicher oder) aus der Umgebungsluft, die mittels eines Kompressors 15 zugeführt wird.

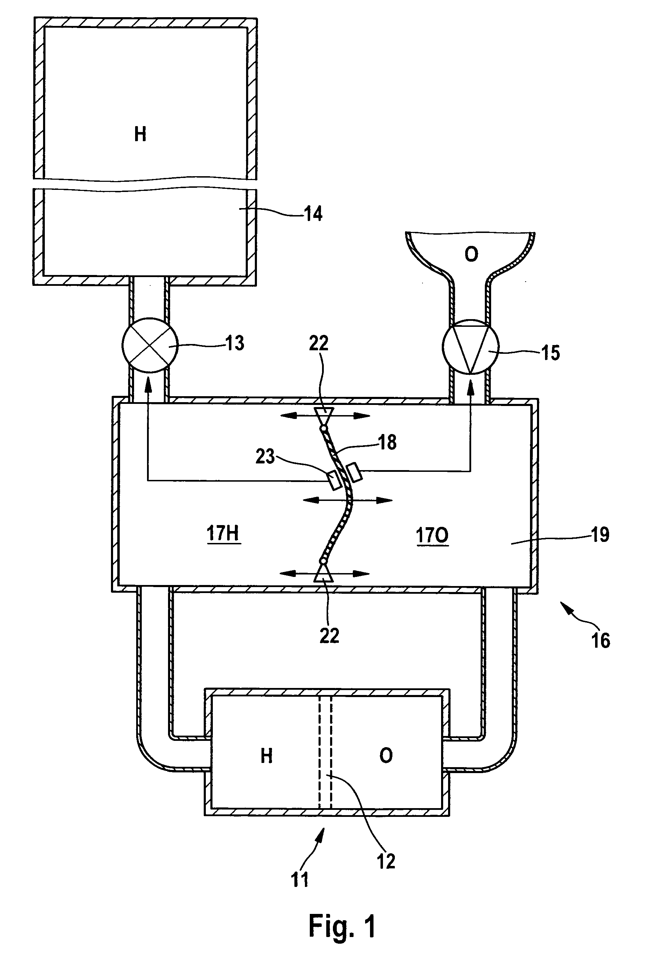

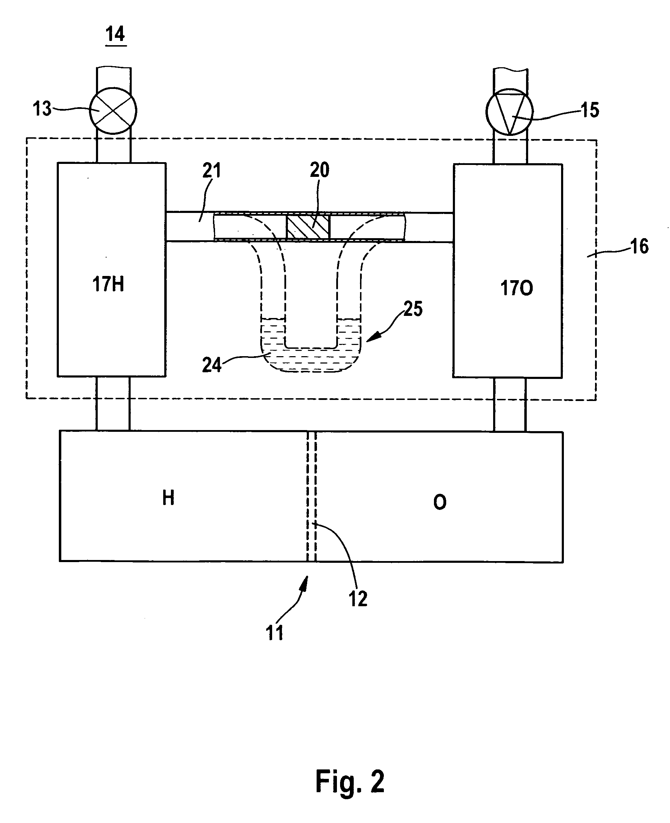

Diese Eduktgas-Beschickung erfolgt nun aber erfindungsgemäß nicht mehr unmittelbar auf die Brennstoffzelle 11, sondern über ein ihr direkt vorgeschaltetes Druckausgleichssystem 16 mit zwei Druckausgleichs-Kammern 17H, 170, die im Falle der Fig.1 durch eine membranähnlich differenzdruckabhängig druckverformbare Trennwand 18 in einem Differenzdruck-Ausgleichsbehälter 19 und im Falle der Fig.2 durch einen Kolben 20 in einem Differenzdruck-Ausgleichskanal 21 gasdicht gegeneinander abgeschottet sind.

Mittels wie in Fig.1 symbolisch vereinfacht skizzierter verschiebbarer Halterungen 22 für die Trennwand 18 im Ausgleichsbehälter 19 kann durch unterschiedliche stationäre Teilvolumina dem Rechnung getragen werden, wenn für den Betrieb der Brennstoffzelle 11 die Druckänderung eines der durchzuleitenden Eduktgase H bzw. O wesentlich größer als diejenige des anderen O bzw. H sein sollte.

In der Fig.1 ist auch symbolisch eine etwaige Sensorbestückung 23 der ausstellbaren Trennwand 18 mit z.B. Dehnungsmeßstreifen berücksichtigt, die vorteilhafterweise etwa mittels optischer Positionsdetektierung ausgeführt werden könnte. Dadurch kann bei Sensieren eines besonders starken, insbesondere eines maximal zulässigen Druckungleichgewichtes auf die Eduktgaszuführungen eingewirkt werden, um im Beispielsfalle der Zeichnung die Wasserstoffzufuhr zu drosseln und / oder die Luftzufuhr zu steigern, was einer aktiven Druckausgleichregelung entspricht, um insbesondere auch stationäre Druckunterschiede zu unterbinden. Beispielsweise sei während des Hochlaufens des Kompressors 15 zu Betriebsbeginn in der Brennstoffzelle 11 der Gasdruck der Luft mit dem Oxidanten O niedriger, als der des über das Ventil 13 aus einem Druckbehälter oder dergleichen Vorratsspeicher 14 abgegebenen Treibstoffes H; was an sich die Membran 12 in der Zelle 11 einseitig belasten und deshalb eine Zerstörungsgefahr heraufbeschwören würde. Das ist erfindungsgemäß nun aber dadurch zuverlässig unterbunden, dass beide Eduktgase H und O über das gemeinsame Druckausgleichssystem 16 und somit praktisch ohne gegenseitigen Druckunterschied in die Brennstoffzelle 11 eingespeist werden.

Denn im Falle der Fig.1 verlagert der zunächst noch höhere Druck in der Kammer 17H unter Druckabbau infolge Vergrößerung eines Teilvolumens im Ausgleichsbehälter 19 dessen Trennwand 18 mit wenigstens einem Teil ihrer Oberfläche in die benachbarte Kammer 170 hinein, womit deren Teilvolumen in gleichem Maße verringert und der Gasdruck darin entsprechend angehoben wird. So stellen sich praktisch unverzögert beiderseits der Trennwand 18 gleiche Gasdrücke für die nun aus dem Ausgleichsbehälter 19 erfolgende Einspeisung der Eduktgase H, O in die Brennstoffzelle 11 ein. In der wird die bruchempfindliche Membran 12 deshalb nun jedenfalls nicht mehr mit einer zerstörungskritischen Druckdifferenz beaufschlagt.

Im Beispielsfalle des Druckausgleichssystemes 16 nach Fig.2 befinden sich die beiden variablen Teilvolumina eines konstanten Gesamtvolumens im die beiden Eduktgas-Kammern 17H, 170 miteinander verbindenden Ausgleichskanal 21, nämlich beiderseits des darin differenzdruckabhängig bis zum Druckgleichgewicht verlagerten Kolbens 20. Im Interesse hoher Gasdichtigkeit trotz geringer Reibung und entsprechend guter dynamischer Reaktion auf Druckänderungen findet bevorzugt kein fester Kolben 20 Anwendung, sondern (gemäß der in Fig.2 gestrichelt angedeuteten Alternative) ein den Querschnitt des Ausgleichskanales 21 lokal füllender, gasresistent eingestellter Flüssigkeitskolben 24. Bevorzugt wird der Flüssigkeitskolben 24 für selbstdichtenden Verschluss des Ausgleichskanales 21 differenzdruckabhängig durch einen im Zuge des Verlaufes des Ausgleichskanales 21 gebildeten Siphon 25 verlagert, der etwa als Tauchsiphon oder wie skizziert U-förmig als kommunizierende Röhre ausgelegt sein kann.

Für die Speisung mit ihren Eduktgasen H, O ist einer Brennstoffzelle 11 also erfindungsgemäß ein Druckausgleichssystem 16 variabler Teilvolumina eines konstanten Summen- oder Gesamt-Volumens vorgeschaltet, das als Trennmedium eine verformbare Trennwand 18 zwischen zwei einander benachbarten Kammern 17H, 170 eines Ausgleichsbehälters 19 oder einen verlagerbaren Kolben 20 in einem Ausgleichskanal 21 zwischen zwei Kammern 17H, 170 aufweist. Bei unterschiedlichen Eduktgas-Drücken wird das Trennmedium zur Kammer 17 mit dem momentan geringeren Gasdruck hin bewegt, bis infolge der unterschiedlichen einander beiderseits des Trennmediums benachbarten Teilvolumina Druckgleichgewicht herrscht. In der aus den Kammern 17 gespeisten Brennstoffzelle 11 wird deren bruchempfindliche Membran 12 deshalb nun jedenfalls nicht mehr mit einer zerstörungskritischen dynamischen Druckdifferenz zwischen den aus dem Ausgleichsbehälter 19 zugeführten Eduktgasen H, O beaufschlagt, ohne hierfür an den Einlaufgarnituren für die Eduktgase H, O aktive Druckregelungen betreiben zu müssen.

### Bezugszeichenliste

- H: Wasserstoff als Treibgas (in 11)
- O: Luft-Sauerstoff als Oxidant (in 11)
- 11: Brennstoffzelle (mit 12)
- 12: Membran (in 11)
- 13: Ventil (hinter 14)
- 14: Vorratsspeicher (für H)
- 15: Kompressor (für O)
- 16: Druckausgleichssystem (mit 19 oder 21; vor 11)
- 17: Druckausgleichs-Kammern 17H, 170 (in 19)
- 18: Trennwand (in 19 zwischen 17H und 170)
- 19: Druck-Ausgleichsbehälter (von 16 zwischen 17H-17O)
- 20: Kolben (in 21)
- 21: Druck-Ausgleichskanal (von 16 zwischen 17H-170)
- 22: verlagerbare Halterungen (für 18 in 19)
- 23: Sensorbestückung (zum Einwirken von 18 für 13/15)
- 24: Flüssigkeitskolben (bei 25)
- 25: Siphon (in 21)

## Patentansprüche

1. Einrichtung zum Betreiben einer Brennstoffzelle (11) mit ihr beiderseits ihrer elektrolytischen Membran (12) eingespeisten Eduktgasen (H, O),
**dadurch gekennzeichnet,**
**dass** der Brennstoffzelle (11) für das Einspeisen ihrer Eduktgase (H, O) ein Druckausgleichssystem (16) mit differenzdruckabhängigen Teilvolumina eines konstanten Summenvolumens beiderseits eines differenzdruckabhängig verlagerbaren Trennmediums vorgeschaltet ist.

2. Einrichtung nach Anspruch 1,
**dadurch gekennzeichnet,**
**dass** ein Druck-Ausgleichsbehälter (19) mittels eines Trennmediums in Form einer druckverformbaren oder druckverlagerbaren Trennwand (18) in einander benachbart gegeneinander abgegrenzte Kammern (17H, 170) für die beiden Teilvolumina unterteilt ist.

3. Einrichtung nach dem vorangehenden Anspruch,
**dadurch gekennzeichnet,**
**dass** die verformbare Trennwand (18) in einer runden Öffnung in einer Montagewand angeordnet ist.

4. Einrichtung nach einem der vorangehenden Ansprüche,
**dadurch gekennzeichnet,**
**dass** die Trennwand (18) im Ausgleichsbehälter (19), zu stationärer Vorgabe unterschiedlicher Teilvolumina in den beiden Kammern (17H, 170), exzentrisch fest oder verlagerbar angeordnet ist.

5. Einrichtung nach Anspruch 1,
**dadurch gekennzeichnet,**
**dass** die beiden Kammern (17H, 170) durch einen Ausgleichskanal (21) mit einem darin druckdifferenzabhängig verlagerbaren Trennmedium miteinander verbunden sind.

6. Einrichtung nach dem vorangehenden Anspruch,
**dadurch gekennzeichnet,**
**dass** das Trennmittel ein Kolben (20) ist.

7. Einrichtung nach Anspruch 5 oder 6,
**dadurch gekennzeichnet,**
**dass** das Trennmittel als ionisch gasresistenter Flüssigkeitskolben (24) ausgelegt ist.

8. Einrichtung nach dem vorangehenden Anspruch,
**dadurch gekennzeichnet,**
**dass** der Flüssigkeitskolben (24) in einem im Zuge des Ausgleichskanales (21) ausgebildeten Tauch- oder U-Siphon (25) vorgehalten ist.

9. Einrichtung nach einem der vorangehenden Ansprüche,
**dadurch gekennzeichnet,**
**dass** das Trennmedium mit wenigstens einer Sensorbestückung (23) zum Drosseln des Zulaufes des unter höherem Druck stehenden oder zum Steigern des Zulaufes des unter niedrigerem Druck stehenden der beiden Eduktgase (H, O) in das Druckausgleichssystem (16) wirkverbunden ist, um insbesondere auch stationäre Druckunterschiede zu unterbinden.

10. Verfahren zum Betreiben einer Brennstoffzelle mit einer Einrichtung gemäß einem der vorangehenden Ansprüche,
**dadurch gekennzeichnet,**
**dass** der Brennstoffzelle ihre Eduktgase beiderseits ihrer elektrolytischen Membran nach einem wechselseitigen Druckausgleich in einem vorgeschalteten Druckausgleichssystemes zugeführt werden.

11. Verfahren nach dem vorangehenden Anspruch,
**dadurch gekennzeichnet,**
**dass** die Zufuhr des unter höherem Druck dem Druckausgleichssystem zugeführten Eduktgases bei Detektion etwa maximal zulässiger Druckdifferenz zwischen den Eduktgasen reduziert oder unterbrochen, bzw. die Zufuhr des unter geringerem Druck stehenden Eduktgases dann gesteigert, wird.

12. Verfahren nach einem der beiden vorangehenden Ansprüche,
**dadurch gekennzeichnet,**
**dass** die Eduktgase zu wechselseitigem Druckangleich vor Einspeisen in die Brennstoffzelle durch je eine zweier in einem Druck-Ausgleichsbehälter von einer differenzdruckabhängig verformbaren oder verlagerbaren Trennwand gegeneinander abgegrenzter Kammern hindurchgeleitet werden.

13. Verfahren nach dem vorangehenden Anspruch,
**dadurch gekennzeichnet,**
**dass** die Trennwand im Ausgleichsbehälter für nach Maßgabe unterschiedlichen Eduktgasbedarfes der Brennstoffzelle ungleiche stationäre Teilvolumina voreingestellt wird.

14. Verfahren nach Anspruch 10 oder 11,
**dadurch gekennzeichnet,**
**dass** in einem zwischen zwei Kammern sich erstreckenden Druck-Ausgleichskanal ein gasfestes Trennmedium differenzdruckabhängig verlagert wird.

15. Verfahren nach dem vorangehenden Anspruch,
**dadurch gekennzeichnet,**
**dass** als Trennmedium eine ionische Flüssigkeit in einem Siphon verdrängt wird.
